# EUROPÄISCHE PATENTSCHRIFT

(11) **EP 2 515 634 B1**
(45) Veröffentlichungstag und Bekanntmachung des Hinweises auf die Patenterteilung: **19.04.2017**
(21) Anmeldenummer: 10788070.0
(22) Anmeldetag: 08.12.2010
(51) Int. Cl.: A01K 31/00

(54) **GEFLÜGELKÄFIG MIT EINSTREUPLATTE**
POULTRY CAGE HAVING LITTER PLATE
CAGE À VOLAILLE COMPORTANT UNE PLAQUE DE DISTRIBUTION DE LITTIÈRE

(30) Priorität: 23.12.2009 DE 202009017565 U
(43) Veröffentlichungstag der Anmeldung: 31.10.2012
(73) Patentinhaber: Big Dutchman International GmbH, 49377 Vechta (DE)
(72) Erfinder: KÜKING, Jörg, 49413 Dinklage (DE)
(74) Vertreter: Eisenführ Speiser
(86) Internationale Anmeldenummer: PCT/EP2010/069158
(87) Internationale Veröffentlichungsnummer: WO 2011/076568

(56) Entgegenhaltungen:
- EP-A1- 1 149 528
- EP-A2- 1 308 088
- CH-A- 405 684
- DE-U1-202007 001 531
- US-A- 3 994 260

## Beschreibung

Die Erfindung betrifft einen Geflügelkäfig, umfassend einen Käfigboden, vorzugsweise aus einer Gitterstruktur, Stirn- und Seitenwände, welche ausgehend von dem Käfigboden sich nach oben erstrecken und einen Tieraufenthaltsbereich begrenzen, eine Einbringvorrichtung für Einstreumaterial, welche oberhalb des Käfigbodens angeordnet ist und aus der Einstreumaterial aus zumindest einer, vorzugsweise mehreren Austrittsöffnungen abgegeben werden kann, wobei zumindest ein Abschnitt der Einbringvorrichtung zwischen den Seitenwänden angeordnet ist, eine mit dem Käfigboden verbundene Einstreuplatte, welche eine nach oben weisende Bodenaufstandsfläche mit einem Abschnitt, der unterhalb der zumindest einen Austrittsöffnung liegt und Befestigungsmittel zum Befestigen der Einstreuplatte an dem Käfigboden aufweist. Weiterhin betrifft die Erfindung eine Einstreuplatte für einen solchen Geflügelkäfig und ein Verfahren zur Herstellung einer solchen Einstreuplatte.

Geflügelkäfige der vorgenannten Art werden insbesondere zur Haltung von Legehennen eingesetzt. Bei der Gestaltung solcher Geflügelkäfige sind die Bedürfnisse der Tiere zu berücksichtigen, um eine artgerechte Haltung zu ermöglichen. In einer Reihe von Ländern werden Mindestanforderungen für solche Geflügelkäfige durch gesetzliche Normen vorgeschrieben, wie beispielsweise durch die Richtlinie 1999/74/EG des Rates vom 19 Juni 1999 zur Festlegung von Mindestanforderungen zum Schutz von Legehennen im europäischen Raum oder in der darüber hinausgehenden TierschNutztV mit Wirkung für Deutschland aus dem Jahr 2006.

Typische Anforderungen, die für eine artgerechte Haltung in Geflügelkäfigen der eingangs genannten Art gestellt werden, sind die Bereitstellung eines bestimmten Flächenangebots pro Henne, einer bestimmten Mindestgesamtfläche und Mindestgesamthöhe des Geflügelkäfigs für die darin gehaltene Gruppe von Hennen, von artgerechten Strukturelementen, wie einem Legenest, Sitzstangen und einem Bereich, in dem den Tieren ein arttypisches Picken und Scharren in einem Einstreumaterial ermöglicht wird. Dieser so genannte Einstreu- oder Scharrbereich ist in einer für die Mehrzahl der Tiere in einem Geflügelkäfig nutzbaren Größe im Geflügelkäfig vorzusehen, um mehreren Tieren gleichzeitig das Picken und Scharren zu ermöglichen.

Der Einstreubereich muss hinsichtlich mehrerer Anforderungen funktionsgerecht gestaltet sein. Zum einen ist sicherzustellen, dass Einstreumaterial, welches in den Einstreubereich eingebracht wird, von den Legehennen nicht innerhalb kürzester Zeit solcherart verteilt wird, dass es aus dem Einstreubereich hinausgelangt. Dies würde dazu führen, dass die Legehennen weder zum Picken animiert werden noch ein Scharren möglich gemacht wird. Zum anderen muss der Einstreubereich solcherart gestaltet sein, dass er in einfacher und zuverlässiger Weise von Verschmutzungen, insbesondere von Kot gereinigt werden kann, um hygienischen Anforderungen gerecht zu werden.

Eine weitere Anforderung an eine artgerechte Haltung von Legehennen in Geflügelkäfigen besteht darin, dass sich durch die Aktivität der Legehennen innerhalb des Geflügelkäfigs die Krallen in einer solchen Weise abnutzen sollen, dass sie eine arttypische Länge behalten und hierdurch vermieden wird, dass die Krallen zu lang werden. Dies ist insbesondere in der Haltung von mehreren Legehennen in einem gemeinsamen Geflügelkäfig (also einem so genannten ausgestalteten Käfig oder einer Kleingruppenhaltung) eine wichtige Anforderung. Denn in einer solchen Kleingruppenhaltung kommt es naturgemäß zu Rangkämpfen unter den Legehennen, die zu Verletzungen führen können, wenn die Krallen der Tiere eine zu große Länge hätten.

Zum Zwecke der Krallenabnutzung ist es bekannt, flächige Steinplatten oder Gewebe mit einer rauen Oberfläche oder engmaschig gelochte Bleche entlang der Seitenwände des Geflügelkäfigs solcherart anzuordnen, dass diese eine geneigte Aufstands-Oberfläche für die Legehennen bilden. Die Legehennen bewegen sich regelmäßig zu diesen Seitenwänden hin, da sie hier auf eine außerhalb des Geflügelkäfigs angeordnete Futterrinne und/oder eine Tränke zugreifen können. Hierbei betreten die Legehennen die rauhe Oberfläche, z.B. der Steinplatte. Durch das dabei auftretende Abrutschen der Tiere auf der Oberfläche nutzen sich die Krallen ab und es wird der gewünschte Zweck erreicht. Jedoch besteht ein Nachteil dieser Anordnung darin, dass die Verankerung der Steinplatten im Käfig konstruktiv aufwändig ist. Weiterhin müsste für eine vollständige und gleichmäßige Behandlung der Krallen aller Tiere der gesamte mit Futterrinnen ausgestattete Seitenwandbereich mit Steinplatten ausgestattet sein, was aber hohe Kosten nach sich ziehen würde.

Aus EP 308088 A2 ist eine Käfiganordnung für Legehennen bekannt, welche eine Einstreuebene umfasst, die unterhalb eines Bodengitters angeordnet ist. Die Einstreuebene besteht aus einem abrasiven Material, wie beispielsweise einer Fliese aus Stein oder einem gebrannten Block und erlaubt den Hennen, zu kratzen und zu picken, um zugleich die Krallen und den Schnabel zu kürzen.

Aus DE 202007001531 U1 ist ein Broilerkäfig mit einem Gitterboden bekannt, bei dem in der Mitte eine in Längsrichtung verlaufen, geschlossene Rinne ausgeformt ist, die der Aufnahme von Spreu dient. Die Tiere haben so die Möglichkeit, zu scharren.

Der Erfindung liegt die Aufgabe zugrunde, einen Geflügelkäfig bereitzustellen, welcher in einer fertigungstechnisch günstigeren Weise als bekannte Geflügelkäfige die Anforderungen von Legehennen umsetzt. Der Erfindung liegt weiterhin die Aufgabe zugrunde, in einer näher am artgerechten Verhalten orientierten Weise einen Geflügelkäfig auszugestalten.

Diese Aufgabe wird erfindungsgemäß durch einen Geflügelkäfig nach Anspruch 1 gelöst.

Der Erfindung liegt ein ausgestalteter Käfig oder ein zur Kleingruppenhaltung geeigneter Geflügelkäfig zu Grunde. Solche Geflügelkäfige weisen typischerweise eine für hygienische Zwecke günstige Bodengitterstruktur über den größten Bereich des Käfigbodens auf. In solchen Geflügelkäfigen ist weiterhin ein Legenest vorhanden, welches in der Regel eine geschlossene oder weitestgehend geschlossene Bodenfläche aufweist und durch Seitenwände abgedunkelt ist. Weiterhin ist eine Scharrfläche, auf der durch eine geeignete Einbringvorrichtung Einstreumaterial aufgebracht wird, vorhanden. Unter Einstreumaterial ist hierbei insbesondere auch Trockenfutter zu verstehen. Solche Geflügelkäfige sind in der Regel geometrisch solcherart aufgebaut, dass eine rechteckige Grundfläche von Seitenwänden und Stirnwänden begrenzt wird. Typischerweise sind Tränke- und Futtervorrichtungen im Bereich der Seitenwände angeordnet und es läuft eine Einbringvorrichtung für Einstreu parallel zu und zwischen den Seitenwänden durch den Geflügelkäfig. Diese Einbringvorrichtung verläuft häufig genau mittig durch den Geflügelkäfig. Geflügelkäfige dieser Bauweise können durch stirnwandseitiges Aneinanderreihen in einer langen Reihe angeordnet werden. In diesem Fall kann sich die Einbringvorrichtung, welche durch den Geflügelkäfig verläuft und die entlang der Seitenwände, typischerweise außerhalb des Geflügelkäfigs verlaufenden Futter- und Tränkevorrichtungen über mehrere solcher in Reihe angeordneter Geflügelkäfige erstrecken.

Es ist bekannt, im Bereich unterhalb der Einbringvorrichtung eine Einstreuplatte im Geflügelkäfig anzuordnen, auf welcher das durch die Einbringvorrichtung eingebrachte Einstreumaterial aufgefangen wird und auf der die Tiere scharren und picken können. Zu diesem Zweck weisen solche Einstreuplatten in der Regel eine geometrische Struktur auf, die beispielsweise in Form von nachgiebigen, nach oben stehenden Fingern, Noppen oder dgl. oder in Form von Taschen, Mulden oder dgl. bestehen kann, um das Einstreumaterial über einen längeren Zeitraum trotz des Scharrens der Tiere auf der Einstreuplatte zu halten und zugleich eine Reinigung der Einstreuplatte zu ermöglichen.

Erfindungsgemäß wird in zumindest einem Oberflächenabschnitt der Einstreuplatte von dieser vorbekannten Art der Ausgestaltung der Einstreuplatte abgegangen und eine abrasiv wirkende Oberfläche der Einstreuplatte vorgesehen. Unter einer abrasiv wirkenden Oberfläche ist hierbei eine Oberfläche zu verstehen, die eine solche Rauigkeit aufweist, dass sie dann, wenn die Legehennen sich auf dieser Oberfläche bewegen, eine Krallenabnutzung bewirkt und diese Wirkung auch aufrechterhält, d.h. nicht durch Abnutzung der Oberfläche verliert. Eine solche abrasiv wirkende Rauigkeit der Oberfläche kann beispielsweise durch eine regelmäßige oder unregelmäßige spanend wirkende Oberfläche erzielt werden, insbesondere kann die Oberfläche mit einer Vielzahl bestimmter oder unbestimmter Schneiden versehen sein, wie sie beispielsweise aus dem Werkzeugbereich für Feilen mit bestimmter oder unbestimmter Schneide und insbesondere dem Bereich der Schleifmittel bekannt sind. So ist beispielsweise eine abrasiv wirkende Rauigkeit geeignet, die etwa der Struktur eines Schleifpapiers mit mittlerer bis feiner Körnung entspricht.

Mit der Erfindung wird der Vorteil erzielt, dass die zur Krallenabnutzung erforderliche Einrichtung im Bereich des Einstreus angeordnet ist und hierdurch das natürliche Scharrverhalten der Tiere dazu genutzt wird, um die Krallen im Sinne einer artgerechten Haltung zu behandeln und abzunutzen. Zugleich wird mit der Erfindung der Vorteil erzielt, dass durch die abrasiv wirkende Oberfläche auch ein zu schneller Austrag des Einstreumaterials von der Einstreuplatte durch die Scharraktivität verhindert wird. Dies kann die darüber hinausgehenden Maßnahmen zum Halten des Einstreumaterials auf der Einstreuplatte, wie beispielsweise Taschen oder Mulden oder dgl., unnötig machen oder zumindest den Umfang und die Anzahl dieser zusätzlichen Maßnahmen reduzieren.

Als weiterer günstiger Effekt der erfindungsgemäßen Ausgestaltung des Geflügelkäfigs hat sich gezeigt, dass durch das Picken der Tiere auf der Einstreuplatte in dem Bereich, der einen abrasiv wirkenden Oberflächenabschnitt aufweist, auch eine Schnabelentschärfung der Legehennen erreicht wird. Dies führt ebenfalls zu einer tiermedizinisch günstigen und artgerechten Haltung, da hierdurch die unerwünschten Folgen von aggressivem Picken gegen Artgenossen und von oft auftretendem Federpicken gemildert werden können. Es ist zu verstehen, dass sich der abrasiv wirkende Oberflächenabschnitt über die gesamte Oberfläche der Einstreuplatte erstrecken kann oder auch nur einen Teilbereich dieser Oberfläche einnehmen kann. Insbesondere kann auch vorgesehen sein, dass die Einstreuplatte oberflächlich Mulden, Taschen oder dgl. aufweist, in denen das Einstreumaterial gesammelt und gegen zügiges Ausscharren zurückgehalten wird und der abrasiv wirkende Oberflächenabschnitt nur innerhalb dieser Mulden, Taschen oder entsprechend anderen geometrischen Strukturen vorgesehen ist.

Grundsätzlich ist es bevorzugt, dass die gesamte Oberfläche der Einstreuplatte, zumindest aber ein großer Teil dieser Oberfläche und vorzugsweise auch der abrasiv wirkende Oberflächenabschnitt solcherart geneigt und ausgestaltet ist, dass darauf verlegte Eier in einer solchen Weise abrollen können, dass sie aus dem Bereich der Einstreuplatte ab- und zu einem Eiersammelband hinrollen können.

Gemäß einer ersten bevorzugten Ausführungsform ist vorgesehen, dass der zumindest eine abrasiv wirkende Oberflächenabschnitt sich bis in einen Bereich erstreckt, der unterhalb der zumindest einen Austrittsöffnung liegt. Bei dieser Ausführungsform wird einerseits das durch die Einbringvorrichtung über eine oder mehrere Austrittsöffnungen abgegebene Einstreumaterial unmittelbar auf den abrasiv wirkenden Oberflächenabschnitt abgegeben, d.h. es gleitet nicht erst über einen etwaig glatten Oberflächenabschnitt der Einstreuplatte, bis es in den abrasiv wirkenden Oberflächenabschnitt gelangt. Durch die unmittelbare Anordnung des abrasiv wirkenden Oberflächenabschnitts unterhalb dieser zumindest einen Austrittsöffnung wird erreicht, dass das Einstreumaterial unterhalb dieser Austrittsöffnung gehalten wird und sich folglich bei kontinuierlichem Austrag von Einstreumaterial aus der Austrittsöffnung aufbauen kann. Dies ist insbesondere dann funktionell erforderlich, wenn durch eine sich längs erstreckende Einbringvorrichtung Einstreumaterial aus mehreren entlang der Erstreckungsrichtung verteilten Öffnungen ausgetragen werden soll, da bei einer solchen Einbringweise das Einstreumaterial sich typischerweise innerhalb der Einbringvorrichtung in deren Erstreckungsrichtung verteilt, und in dieser Erstreckungsrichtung liegende Austrittsöffnungen aufeinander folgend beschickt werden. Dabei ist es in bestimmten Ausführungsformen erforderlich, dass eine Austrittsöffnung, die in dieser Verteilrichtung vor einer anderen Austrittsöffnung liegt, zunächst verschlossen wird, bevor die dahinter liegende Austrittsöffnung mit Einstreumaterial beschickt wird. Dieser Verschluss kann durch das sich auf dem abrasiv wirkenden Oberflächenabschnitt aufbauende Einstreumaterial erreicht wird, indem ein Einstreumaterialkegel aufgebaut wird, der bei einer bestimmten Höhe die Austrittsöffnung erreicht und hierdurch verschließt.

Noch weiter ist es bevorzugt, dass der zumindest eine abrasiv wirkende Oberflächenabschnitt durch eine Vielzahl abrasiv wirkender Körner, welche in ein Bindematerial teilweise oder vollständig eingebettet sind, gebildet wird. Diese Ausgestaltung ermöglicht eine fertigungstechnisch günstige Herstellung der Einstreuplatte. Als abrasiv wirkende Körner eignen sich hierbei insbesondere Körner, welche ein etwa gleichmäßiges Längen-/Breiten/Höhenverhältnis aufweisen und weiter kommen vorzugsweise Körner zur Verwendung, welche eine Korngröße zwischen 80µm und 600µm aufweisen, insbesondere etwa 200µm. Dabei können insbesondere Körner aus Korund oder einem anderen abrasionsbeständigem anorganischen Material eingesetzt werden.

Noch weiter ist es bevorzugt, dass die Einstreuplatte aus einem Polymermaterial hergestellt ist, in das in dem zumindest einen Oberflächenabschnitt eine Vielzahl abrasiv wirkender Körner teilweise oder vollständig unmittelbar in das Polymermaterial oder in ein ausgehärtetes Bindemittel eingebettet ist. Gemäß dieser Ausgestaltung ist die Einstreuplatte aus einem hygienisch und fertigungstechnisch günstigen Polymermaterial hergestellt. Dabei können, um den abrasiv wirkenden Oberflächenabschnitt auszubilden, Körner aus einem von diesem Polymermaterial unterschiedlichen Material so mit der Einstreuplatte verbunden werden, dass diese in einem Oberflächenbereich angeordnet sind. Dies kann insbesondere solcherart erfolgen, dass die Körner vollständig in das Polymermaterial eingebettet sind, d.h. vollständig von Polymermaterial umgeben sind und folglich lediglich eine raue Oberflächenstruktur des Polymermaterials erzeugen oder indem die Körner nur teilweise in das Polymermaterial eingebettet sind und folglich oberflächlich aus dem Polymermaterial vorstehen, wodurch eine abrasiv wirkende Oberfläche durch die Körner selbst und direkt gebildet wird. Alternativ hierzu kann auch vorgesehen sein, dass die abrasiv wirkenden Körner In ein von dem Polymermaterial verschiedenes Bindemittel teilweise oder vollständig eingebunden sind und dieses Bindemittel wiederum auf die Einstreuplatte aus Polymermaterial aufgebracht und mit dieser verbunden wird. Als ein solches Bindemittel eignet sich beispielsweise ein Harz wie Epoxidharz oder dgl., welches geeignet ist, abrasiv wirkende Körner in mechanisch und adhäsiv zuverlässiger Weise zu binden. Grundsätzlich ist bei dieser Ausführungsform zu verstehen, dass die Einstreuplatte auch insgesamt aus einem solchen Harz, gegebenenfalls mit einer Faserverstärkung, beispielsweise als GFK-Platte hergestellt werden kann und hierbei die abrasiv wirkenden Körner oberflächlich vollständig oder abschnittsweise eingebunden werden. Alternativ kann die Einstreuplatte durch einen mechanischen Grundträger aus einem kostengünstigen Polymer, wie beispielsweise Polyethylen oder Polypropylen, auf den eine dünne Schicht eines als Binder dienenden anderen Polymermaterials aufgetragen ist, in dem die abrasiv wirkenden Körner eingebunden sind, gebildet werden.

Erfindungsgemäß weist die Einstreuplatte mehrere, als Vertiefungen ausgebildete Futter/Einstreutaschentaschen auf, die vorzugsweise als eine Reihe oder mehrere parallele Reihen nebeneinander angeordneter Vertiefungen ausgeführt sind. Wie zuvor erläutert, können diese Mulden oder Taschen in dem Bereich des abrasiv wirkenden Oberflächenabschnitts liegen oder alleinig diesen abrasiv wirkenden Oberflächenabschnitt bilden oder können außerhalb dieses Bereichs angeordnet sein. Die Mulden oder Taschen dienen dazu, das Futter/Einstreumaterial zusätzlich auf der Einstreuplatte zu halten und einen schnellen Austrag des Einstreumaterials von der Einstreuplatte zu verhindern.

Noch weiter ist es bevorzugt, dass der zumindest eine abrasiv wirkende Oberflächenabschnitt der Bodenaufstandsfläche eine Rauigkeit mit einem ersten Rauhigkeitswertbereich aufweist und die Bodenaufstandsfläche zumindest einen zweiten Oberflächenabschnitt umfasst, in dem eine Rauigkeit mit einem zweiten Rauhigkeitswertbereich ausgebildet ist, der eine gröbere Oberflächenstruktur hat als der erste Rauigkeitswertbereich. Mit dieser Ausführungsform wird eine Gestaltung vorgeschlagen, welche einerseits im ersten Bereich eine für die Krallenabnutzung und Schnabelentschärfung günstige abrasive Wirkung aufweist und andererseits in dem zweiten Rauigkeitsbereich eine gute Standsicherheit der darauf laufenden Tiere bereitstellt. Dabei ist zu verstehen, dass insbesondere der zweite Rauigkeitsbereich auch durch regelmäßige geometrische Strukturen, wie beispielsweise Stege, Nutabschnitte oder dgl. gebildet werden kann. Insbesondere ist bevorzugt, dass der zumindest eine zweite Oberflächenabschnitt durch eine geometrische Strukturierung gebildet wird, insbesondere durch eine Vielzahl von Mulden oder Erhebungen, welche in der Bodenaufstandsfläche der Einstreuplatte ausgebildet sind.

Weiterhin ist es bevorzugt, dass die Einstreuplatte solcherart geneigt angeordnet ist, dass darauf abgelegte Eier von der Einstreuplatte in Richtung einer Seitenwand abrollen und dass vorzugsweise die Oberflächenstruktur solcherart ausgebildet ist, dass ein auf der Einstreuplatte abgelegtes Ei an keinem Ort auf der Einstreuplatte durch eine quer oder schräg bezüglich Rollrichtung einer auf die Seitenwand zu verlaufenden Struktur auf der Einstreuplatte gehalten wird. Mit dieser Ausführungsform wird sichergestellt, dass verlegte Eier, also Eier, die nicht im Legenest gelegt worden sind, von der Einstreuplatte abrollen können. Dabei ist zu verstehen, dass dieser Abrollvorgang nicht durch einen beliebig großen Neigungswinkel erzielt werden kann, da in diesem Fall die abrollenden Eier eine zu hohe Rollgeschwindigkeit erreichen würden und in Folge dessen beschädigt werden könnten. Stattdessen ist typischerweise eine gemäßigte Neigung zwischen 1 bis 20 Grad praktikabel. Eine solche gemäßigte Neigung erfordert eine entsprechend gestaltete Oberflächengeometrie der Einstreuplatte. Dabei ist zu verstehen, dass ein unerwünschtes Halten eines Eis oder gar ein unerwünschtes Abstoppen eines rollenden Eis auf der Einstreuplatte durch unterschiedliche geometrische Maßnahmen verhindert werden kann. Zum einen können lediglich Strukturen vorhanden sein, welche sich in der gewünschten Rollrichtung erstrecken. Dies kann in vielen Ablegesituationen ein Halten der Eier verhindern. Jedoch kann aufgrund der nicht kugelförmigen Gestalt von Eiern auch durch eine solche, in Rollrichtung verlaufende Struktur ein Ei aufgehalten werden, wenn es daran gehindert wird sich mit seiner Längsachse senkrecht zur Rollrichtung auszurichten und dann abzurollen. Ein solcherart fixiertes Ei, welches mit seiner Längsachse in Rollrichtung, d.h. senkrecht zur Seitenwand orientiert fixiert ist, wird selbst bei Neigungen von bis zu 20 Grad nicht abrollen können. Es ist daher bevorzugt, auch in Rollrichtung sich erstreckende Strukturen lediglich bis zu einer solchen Maximalhöhe und bis zu einem solchen Maximalabstand vorzusehen, dass eine solche Ausrichtungsfixierung eines abgelegten Eis unterbleibt.

Erfindungsgemäß sind auch Mulden, Vertiefungen und dergleichen in der Einstreuplatte vorgesehen, welche der Zurückhaltung des Einstreumaterials dienen. Solche Mulden und Vertiefungen weisen naturgemäß quer oder schräg zur gewünschten Rollrichtung der Eier verlaufende Wandstrukturen auf. Diese Wandstrukturen sind potentiell geeignet, um ein gelegtes Ei zu halten oder ein rollendes Ei abzustoppen. Es ist daher insbesondere vorgesehen, solche Mulden, Taschen, Vertiefungen oder dergleichen in einer solchen Breite auszuführen, dass ein Ei nur soweit in die Mulde, Tasche bzw. Vertiefung mit seinem Umfang eintritt, dass es weder in seiner Ausrichtung fixiert noch durch eine quer zur Rollrichtung verlaufende Wandstruktur der Mulde, Tasche bzw. Vertiefung gehalten wird. Unter der Breite ist hierbei das Maß quer zur gewünschten Rollrichtung, also das Maß parallel zur Seitenwand zu verstehen. Insbesondere kann die Breite solcher Mulden, Taschen, Vertiefungen oder dergleichen etwa übereinstimmend sein zum Gitterabstand des Käfigbodens in der gleichen Richtung, zumindest aber sollte die Breite nicht größer sein als dieser Gitterabstand. Unter Gitterabstand ist hierbei der Abstand zweier benachbarter, paralleler Gitterstäbe zu verstehen. Bevorzugt dringt ein Ei nur mit weniger als 10% seines Volumens oder um weniger als 10% seines kleinsten Durchmessers in die Mulde, Tasche bzw. Vertiefung ein. Hierdurch kann eine Ausrichtungsfixierung in der regel zuverlässig verhindert werden. Grundsätzlich ist zu verstehen, dass die vorgenannten Ausführungen und Geometrien an die Eigröße anzupassen sind. So ist bei Geflügelkäfigen, in denen Geflügel gehalten wird, welches kleine Eier legt, auch eine geringere Maximalbreite einer Mulde, Tasche bzw. Vertiefung vorzusehen. Grundsätzlich sind bei der typischen und am meisten verbreiteten Hühnerhaltung beispielsweise eine Breite von 1,5-2,5cm ideal, um das gewünschte langsame Abrollen sicherzustellen.

Gemäß einer weiteren bevorzugten Ausführungsform ist vorgesehen, dass sich die Einstreuplatte ausgehend von dem unterhalb der zumindest einen Austrittsöffnung liegenden Abschnitt beidseits in Richtung jeder der beiden Seitenwände erstreckt und dass der/die abrasiv wirkende(n) Oberflächenabschnitt(e) so angeordnet ist/sind, dass er/sie beidseits der Einbringvorrichtung bereitgestellt ist/sind. Grundsätzlich ist zu verstehen, dass die erfindungsgemäße Einstreuplatte solcherart ausgestaltet sein kann, dass sie sich ausgehend von einem Abschnitt, der unterhalb einer Austrittsöffnung der Einbringungsvorrichtung angeordnet ist, nur in Richtung einer Seitenwand von der Einbringvorrichtung weg erstreckt. In diesem Fall ist der unterhalb der Austrittsöffnung angeordnete Abschnitt der Einstreuplatte im Bereich einer Seitenkante der Einstreuplatte angeordnet und insbesondere kann auch der abrasiv wirkende Abschnitt im Bereich dieser Seitenkante der Einstreuplatte angeordnet sein. Aus einer solchen Einstreuplatte lässt sich dann eine Scharr- und Pickfläche gestalten, die in Bezug auf die durch die Einbringvorrichtung definierte Linie auf nur einer Seite des Geflügelkäfigs angeordnet ist. Grundsätzlich kann mit zwei solcherart gestalteten Einstreuplatten dann auch eine in Bezug auf die Linie der Einbringvorrichtung symmetrische Gestaltung (in Form einer Punkt- oder Liniensymmetrie) realisiert werden und hierdurch zwei beidseits der Einbringvorrichtung liegende Scharrund Pickflächen bereitgestellt werden. Um jedoch diese beidseitige Ausgestaltung sowohl hinsichtlich Fertigung als auch Montage zu vereinfachen und eine erhöhte Sicherheit gegen unerwünschtes Hindurchfallen von Einstreumaterial zwischen zwei solcher Einstreuplatten zu erzielen, ist es insbesondere bevorzugt, die Einstreuplatte mit beidseits in Richtung auf beide Seitenwände sich erstreckenden Abschnitten und abrasiv wirkende Oberflächen zu versehen, so dass mit einer einzigen, einstückigen Einstreuplatte zwei Scharrflächen im Geflügelkäfig bereitgestellt werden.

Noch weiter ist es bevorzugt, dass die Einbringvorrichtung ein Förderrohr mit einem darin angeordneten, rotierenden Förderorgan ist, das Förderrohr von einer Stirnseite zu der anderen Stirnseite durch den Tieraufenthaltsbereich verläuft und zumindest eine radiale Öffnung zur Abgabe von Futter/Einstreumaterial hat. Mit einer solchen Einbringvorrichtung wird eine wirkungsvolle Einbringung von Einstreumaterial erzielt und hierbei insbesondere ermöglicht, dass mittels der Einbringvorrichtung innerhalb einer Reihe von Geflügelkäfigen in jedem Geflügelkäfig Einstreumaterial ausgebracht wird. Bei der stirnflächenseitigen Aneinanderreihung kann die Einbringvorrichtung als durchlaufendes Förderrohr ausgeführt werden, welches dazu dient, um in allen aneinander gereihten Geflügelkäfigen Einstreumaterial durch entsprechend dort ausgebildete Austrittsöffnungen einzubringen.

Noch weiter ist es gemäß einer bevorzugten Ausführungsform vorgesehen, dass die Einstreuplatte unterhalb des Käfigbodens angeordnet ist. Grundsätzlich ist zu verstehen, dass die Einstreuplatte oberhalb des Käfigbodens des Geflügelkäfigs angeordnet werden kann und folglich in diesem Bereich ihrer Anordnung die Bodenaufstandsfläche vollständig darstellt. Diese Anordnung oberhalb des Käfigbodens hat den Vorteil, dass die Oberflächenstruktur im Bereich der Einstreuplatte frei gestaltet werden kann und an die Bedürfnisse der Tiere in bester Weise angepasst werden kann. In einer alternativen Ausgestaltung ist es auch in bestimmten Anwendungen vorzuziehen, die Einstreuplatte unterhalb des Käfigbodens anzuordnen. In diesem Fall ist es bevorzugt, die Einstreuplatte solcherart anzuordnen, dass sie unmittelbar unterhalb des Käfigbodens liegt, d.h. solcherart, dass die nach oben weisende Oberfläche der Einstreuplatte zumindest abschnittsweise in Kontakt mit der Unterseite der Gitterstäbe, welche den Käfigboden ausbilden, steht oder in einem sehr geringen Abstand hierzu ist. Diese Ausgestaltung macht sich zunutze, dass auch dann, wenn eine solche Anordnung unterhalb des Käfigbodens gewählt wird, die nach oben weisende Oberfläche der Einstreuplatte als Bodenaufstandsfläche zumindest teilweise genutzt wird, da die Krallen der Tiere und die Schnäbel der Tiere beim Scharren und Picken durch die Gitterstruktur des Käfigbodens hindurch in Kontakt mit der Einstreuplatte kommen und folglich auch die gewünschte abrasive Wirkung eines abrasiv wirkenden Abschnitts der Einstreuplatte auf die Krallen und Schnäbel erzielt wird.

Des Weiteren hat diese Anordnung der Einstreuplatte unterhalb des Käfigbodens den Vorteil, dass die Gitterstruktur der Käfigbodens oberhalb der Einstreuplatte zu liegen kommt. Hierdurch können verlegte Eier, die in diesem Bereich zu liegen kommen, in günstiger und schonender Weise zu einer Eiersammelvorrichtung abrollen, wie dies auch in anderen Bereichen des Käfigbodens erfolgen würde. Es ist daher keine zusätzliche Funktionalität der Einstreuplatte in Bezug auf das Abrollen solcher verlegter Eier vorzusehen. Darüber hinaus kann bei dieser Ausgestaltung auch vorzugsweise auf zusätzliche Funktionalitäten wie Mulden, Taschen zur Rückhaltung des Einstreumaterials verzichtet werden und ebenfalls vorzugsweise auf Oberflächenstrukturierungen, welche die Standsicherheit der Tiere auf der Einstreuplatte erhöhen. Diese beiden Funktionen können stattdessen bei dieser bevorzugten Ausführungsform durch die Gitterstabanordnung des Käfigbodens übernommen werden. Die Ausgestaltung der Anordnung der Einstreuplatte unterhalb des Käfigbodens eignet sich daher insbesondere für eine kostengünstig herzustellende Einstreuplatte, welche sich ausschließlich dadurch auszeichnet, dass sie abschnittsweise oder vollständig einen abrasiv wirkenden Bereich aufweist, ansonsten aber keine spezifischen Strukturmerkmale aufweisen muss.

Ein weiterer Aspekt der Erfindung betrifft eine Einstreuplatte nach Anspruch 12.

Bezüglich der Eigenschaften des abrasiv wirkenden Abschnitts sind die vorherigen Erläuterungen zu dem Geflügelkäfig mit einer entsprechend gestalteten Einstreuplatte vollständig anwendbar und werden hiermit in Bezug genommen. Grundsätzlich ist bezüglich der Einstreuplatte zu verstehen, dass die Bodenaufstandsfläche in der Einbaulage nach oben zu weisen hat und auf dieser nach oben weisenden Fläche der abrasiv wirkende Oberflächenabschnitt angeordnet ist Weiterhin ist zu verstehen, dass die Befestigungsmittel einerseits solche Befestigungsmittel sein können, welche dazu geeignet sind, um die Einstreuplatte auf, d.h. oberhalb des Käfigbodens anzuordnen und zu befestigen, andererseits können die Befestigungsmittel auch ausgestaltet sein, um die Einstreuplatte unterhalb des Käfigbodens anzuordnen und zu befestigen. Dabei ist insbesondere vorzusehen, dass die Befestigungsmittel ausgebildet sind, um einen Formschluss mit den Gitterstäben des Käfigbodens auszubilden. Es kann vorgesehen sein, dass die Befestigungsmittel ausgebildet sind, um zu ermöglichen, dass die Einstreuplatte sowohl oberhalb oder alternativ unterhalb der Käfigbodens angeordnet und befestigt wird. Diese Ausführungsform ermöglicht es dem Tierhalter, eine den Bedürfnissen der Tiere und seiner Überzeugung entsprechende Anordnung der Einstreuplatte vorzunehmen und hierbei insbesondere gegebenenfalls auch die Anordnung der Einstreuplatte an die Entwicklung der Tiere innerhalb des Geflügelkäfigs anzupassen.

Die erfindungsgemäße Einstreuplatte kann fortgebildet werden, indem der abrasiv wirkende Oberflächenabschnitt in einem Mittelbereich der Einstreuplatte angeordnet ist. Durch diese Anordnung eignet sich die Einstreuplatte insbesondere für die zuvor in Bezug auf den Geflügelkäfig erläuterte Anordnung beidseits einer durch den Geflügelkäfig, insbesondere mittig durch den Geflügelkäfig verlaufenden Einbringvorrichtung.

Noch weiter ist es bevorzugt, dass der abrasiv wirkende Oberflächenabschnitt nach einem der Patentansprüche 3 - 8 ausgebildet ist. In Bezug auf diese bevorzugten Ausführungsformen des abrasiv wirkenden Oberflächenabschnitts wird auf die vorhergehenden Erläuterungen bezüglich des Geflügelkäfigs mit einem entsprechend ausgestalteten abrasiv wirkenden Abschnitt Bezug genommen.

Die erfindungsgemäße Einstreuplatte kann nach einem Verfahren nach Anspruch 15 hergestellt werden.Die Verbindung zwischen dem Oberflächenabschnitt und den abrasiv wirkenden Körnern kann hierbei durch adhäsive Kräfte und/oder durch Formschluss erfolgen. Grundsätzlich kann die Verbindung unmittelbar zu dem Polymer hergestellt werden, aus dem die Trägergrundplatte hergestellt ist. Alternativ kann jedoch die Verbindung zu den Körnern auch mittels eines Bindermaterials, beispielsweise eines Epoxidharzes, hergestellt werden, welches auf die Trägergrundplatte zu diesem Zweck aufgetragen wird, seinerseits adhäsiv und/oder formschlüssig mit der Trägergrundplatte verbunden ist und die Körner teilweise oder vollständig einschließt.

Das Verfahren kann fortgebildet werden, indem die abrasiv wirkenden Körner in dem Ausformungsschritt der Trägergrundplatte mit dem Oberflächenabschnitt der

Trägergrundplatte verbunden werden. Diese Ausgestaltung ermöglicht es, bereits in dem Schritt, in dem aus dem noch nicht ausgehärteten (weil erwärmtem oder noch nicht vernetztem) Polymer zugleich mit der Formgebung der Trägergrundplatte auch die Anbindung der abrasiv wirkenden Körner unmittelbar in das Material der Trägergrundplatte erfolgt. Hierdurch werden die beiden funktionellen Fertigungsvorgänge der Ausformung der Trägergrundplatte und der Anbindung der abrasiv wirkenden Körner in einen einzigen Fertigungsschritt vereint, was die Fertigungskosten reduzieren kann.

Bevorzugte Ausführungsformen der Erfindung werden anhand der beiliegenden Figuren beschrleben. Es zeigen:
Fig. 1 eine Ansicht eines Geflügelkäfigs, der die Anforderungen an einen ausgestalteten Käfig nach europäischen Vorschriften und an eine Gruppentierhaltung nach deutschen Vorschriften erfüllt und erfindungsgemäß ausgestaltet ist, in einer perspektivischen Ansicht von schräg oben,
Fig. 2 eine Detailansicht der Scharr- und Pickzone der Ausgestaltung nach Fig. 1, in einer perspektivischen Ansicht von schräg oben,
Fig. 3 eine Einzelansicht einer Einstreuplatte, welche in dem Geflügelkäfig gemäß den Figuren 1 und 2 eingesetzt ist in einer perspektivischen Ansicht von schräg oben,
Fig. 4 eine stirnseitige Seitenansicht der Einstreuplatte gemäß Fig. 3, und
Fig. 5 eine Detailansicht gemäß Fig. 2 einer zweiten Ausführungsform der Erfindung mit einer unterhalb des Käfigbodens angeordneten Einstreuplatte.

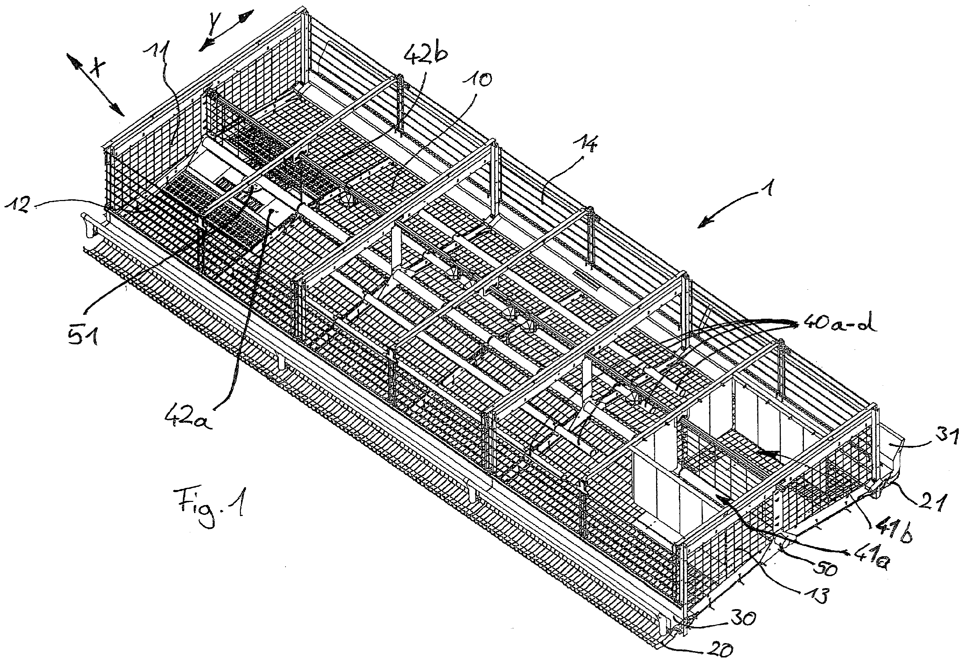

Wie man zunächst grundsätzlich Fig. 1 entnehmen kann, weist ein Geflügelkäfig 1 einen Tieraufenthaltsbereich auf, der durch einen Käfigboden 10, stirnseitige Wände 11, 13 und Seitenwände 12, 14 nach unten und zu allen Seiten begrenzt wird. Typischerweise ist ein solcher Geflügelkäfig 1 nicht mit einer separaten oberseitigen Abdeckung versehen. Geflügelkäfige der dargestellten Bauweise werden typischerweise in gestapelter Weise übereinander angeordnet. Zwischen den Etagen ist jeweils ein geschlossenes Transportband für den anfallenden Geflügelkotangeordnet. Durch dieses Transportband oder ein entsprechend um das Transportband angeordnetes Transportbandgehäuse wird funktionell auch eine oberseitige Abdeckung des darunterliegenden Käfigs erzielt.. Sowohl die stirnseitigen Wände 11, 13 als auch die Seitenwände 12, 14 und der Käfigboden sind aus einer Käfiggitterstruktur ausgebildet und können ein- oder mehrteilig ausgeführt sein.

Der Geflügelkäfig 1 weist eine grundsätzlich rechteckige Struktur auf und erstreckt sich in Längsrichtung x, also in Richtung der Seitenwände 12, 14 weiter als in Tiefenrichtung y, also in Richtung der stirnseitigen Wände 11, 13. Insbesondere weist der Geflügelkäfig eine etwa dreifach größere Länge als Tiefe auf.

Entlang der Seitenwände 12, 14 ist außerhalb des Geflügelkäfigs eine Eiersammelrinne 20, 21 auf beiden Seiten des Geflügelkäfigs angeordnet. Der Käfigboden 10 des Geflügelkäfigs 1 ist ausgehend von der Mittellinie in Richtung auf die Seitenwände abschüssig geneigt, so dass Eier, welche auf dem Käfigboden verlegt werden, langsam in y-Richtung in außerhalb der Seitenwände 12, 14 angeordnete Eiersammeirinnen 20, 21 abrollen und dort gesammelt werden können.

Oberhalb jeder Eiersammelrinne 20, 21 ist ein ebenfalls außerhalb des Geflügelkäfigs angeordneter Futtertrog 30, 31 vorhanden, der sich in x-Richtung entlang der gesamten Seitenwände als Rinne erstreckt. Das Futter in diesem Futtertrog 30, 31 können die im Käfig befindlichen Legehennen durch die Öffnungen des Gitters der Seitenwände erreichen.

Der Geflügelkäfig 1 weist weiterhin eine Anzahl von Einrichtungen auf, welche eine artgerechte Haltung befördern. Dies sind insbesondere vier Sitzstangen 40a - d, die sich in Längsrichtung des Käfigs über einen Teilabschnitt des Käfigs erstrecken, zwei Legenester 41a, b, die durch Seitenwände einen abgedunkelten Bereich innerhalb der Käfiganlage darstellen, der von den Legehennen durch wegklappende Wandabschnitte betreten und verlassen werden kann, und zwei Scharr- und Pickzonen 42a, b, in denen die Legehennen in einem dort ausgebrachten Einstreu scharren und picken können.

Durch die Mitte des Geflügelkäfigs 1 erstreckt sich in einem beidseitig gleichen Abstand zu den Seitenwänden 12, 14 eine Einbringvorrichtung 50 in Längsrichtung des Geflügelkäfigs. Die Einbringvorrichtung 50 umfasst ein Förderrohr, welches sich von einer stirnseitigen Wand 11 zur anderen stirnseitigen Wand 13 durchgehend erstreckt und durch die stirnseitigen Wände hindurchtritt, um stirnseitig benachbarte Geflügelkäfige in gleicher Weise zu durchlaufen. Im Bereich der Scharr- und Pickzonen 42a, b ist in das Förderrohr der Einbringvorrichtung 50 eine radiale Austrittsöffnung auf der Unterseite eingebracht, durch die Einstreumaterial 51 austreten kann, wenn eine innerhalb des Förderrohrs angeordnete Förderschnecke in Rotation versetzt wird.

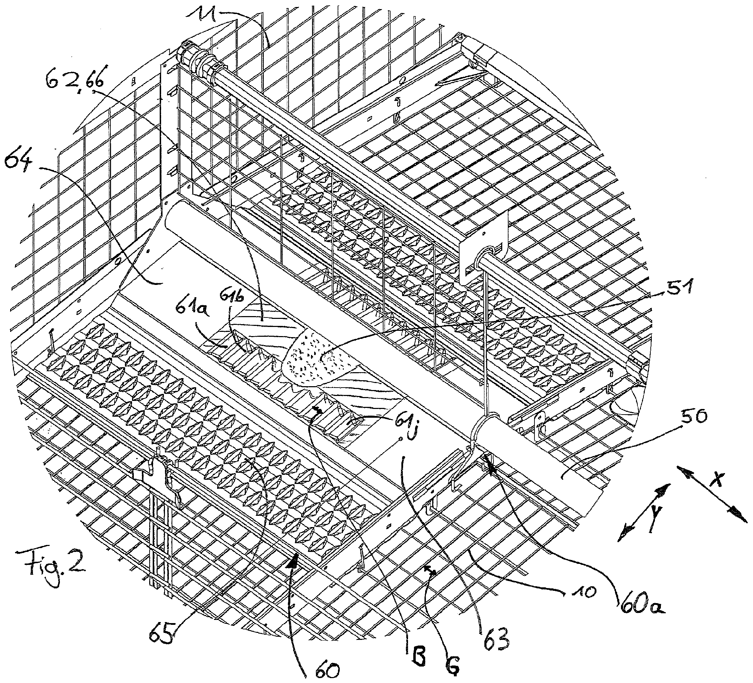

Wie aus Fig. 2 in größerem Detail ersichtlich, ist in der Scharr- und Pickzone eine Einstreuplatte 60 oberhalb des Käfigbodens 10 angeordnet. Die Einstreuplatte 60 erstreckt sich ausgehend von einem Bereich 66 unterhalb der Einbringvorrichtung 50 zu beiden Seiten in Y-Richtung auf die Seitenwände und ist in Bezug auf die durch die Einbringvorrichtung 50 definierte vertikale Mittelebene symmetrisch aufgebaut. Die Einstreuplatte 60 wird nachfolgend in Bezug auf eine Seite beschrieben, wobei zu verstehen ist, dass die andere Seite der Einstreuplatte in symmetrischer Weise gleicher Art ausgestaltet ist.

Die Einstreuplatte 60 weist in einer in Bezug auf ihre Längsrichtung x mittig angeordneten Zone eine Mehrzahl von in Längsrichtung x in Reihe nebeneinander angeordneten Taschen 61a-j auf. Diese Taschen sind als Mulden in der Einstreuplatte ausgebildet und erstrecken sich ausgehend von der nach oben weisenden Oberfläche der Einstreuplatte nach unten. Jede Tasche weist eine Breite (B) auf, welche dem Gitterabstand (G) des Bodengitters entspricht. Hierdurch wird sichergestellt, dass ein Ei, welches im Bereich der Taschen abgelegt wird oder in den Bereich dieser Taschen hineinrollt, nur soweit in die Tasche hineinragt, dass es weder in seiner Orientierung durch die parallel zu den Stirnwänden des Geflügelkäfigs verlaufenden Seitenwände der Tasche fixiert wird noch durch die untere oder obere, parallel zu den Seitenwänden des Geflügelkäfigs verlaufende Taschenbegrenzung aufgehalten wird. Die Taschen weisen im Ausführungsbeispiel eine für Hühnereier ausgelegte innere Breite, gemessen zwischen den Innenflächen der Seitenwände von 1,5cm auf.

Die Taschen 61a-j und ein in Fig. 2 schraffiert dargestellter Bereich 62 sind mit einer abrasiv wirkenden Oberfläche versehen. Diese abrasiv wirkende Oberfläche ist durch teilweise Anbindung von Korundkörnern einer Korngröße von 80 µm bis 600 µm, vorzugsweise 200 µm mittels eines Bindermaterials, beispielsweise Epoxidharzan die beispielsweise aus Polyethylen bestehende Grundträgerplatte der Einstreuplatte 60 adhäsiv und teilweise formschlüssig angebunden.

Mittig in Bezug auf die Längsrichtung x und innerhalb der durch die Einbringvorrichtung 50 definierten Mittelebene des Geflügelkäfigs ist auf der Unterseite der Einbringvorrichtung 50 eine Austrittsöffnung (nicht sichtbar) angeordnet, aus der Einstreumaterial 51 als Kegel austreten kann, wenn eine innerhalb des Förderrohrs der Einbringvorrichtung 50 angeordnete Förderschnecke in Rotation versetzt wird. Aufgrund der abrasiv wirkenden Oberfläche 62 rutscht dieses Einstreumaterial 51 nicht unmittelbar in Richtung der Seitenwände auf der abschüssigen Oberfläche der Einstreuplatte 60 ab, sondern bildet einen Kegel um die Austrittsöffnung aus, der bis zu einer bestimmten Höhe anwächst und dann die Austrittsöffnung erreicht, diese umgibt und hierdurch verschließt. Sobald dieser Verschluss erzielt ist, wird durch die Förderschnecke kein weiteres Material aus der Austrittsöffnung herausgefördert, sondern das Einstreumaterial innerhalb des Förderrohrs der Einbringvorrichtung in einen stirnseitig benachbarten Geflügelkäfig gefördert und tritt aus einer dortigen entsprechend ausgebildeten Austrittsöffnung wiederum aus, bis auch diese durch einen aufgebauten Kegel verschlossen ist.

In dem praktischen Einsatz der Einstreuplatte wird sich das in Form des Kegels eingebrachte Einstreumaterial nach seiner Einbringung durch die Scharr- und Pickaktivität der Tiere verhältnismäßig schnell in dem abrasiv wirkenden Abschnitt 62 und den Taschen 61a-j verteilen. Bei der Scharraktivität innerhalb dieses Einstreus tritt eine Abrasivwirkung auf die Krallen der Tiere auf, durch welche diese Krallen auf einer artgerechten Länge gehalten werden. Da die Tiere weiterhin in dem Einstreu picken, kommt auch der Schnabel mit der abrasiv wirkenden Oberfläche 62 in Kontakt und wird dort und durch die Abrasivwirkung in den Taschen 61a-j in zuverlässiger Weise allseits solcherart entschärft, dass er keine Verletzungen der Tiere bewirken kann.

In Längsrichtung beidseits des abrasiv wirkenden Abschnitts 62 sind Abschnitte 63, 64 angeordnet, die nicht mit einer abrasiv wirkenden Oberfläche versehen sind. An diese Abschnitte 62, 63, 64 schließt sich in Y-Richtung auf die Seitenwände 12, 14 des Geflügelkäfigs ein weiterer Abschnitt 65 der Einstreuplatte an. Der Abschnitt 65 ist mit einer geometrisch regelmäßigen Oberflächenstruktur versehen, welche aus länglich ausgeformten und kreuzweise in x- und y-Richtung verlaufend ausgebildeten Mulden besteht. Diese geometrische Strukturierung des Abschnitts 65 bewirkt einerseits, dass Einstreumaterial, welches aus der Zone 62 oder den Zonen 63, 64 in der abschüssigen Richtung der Einstreuplatte in Richtung auf die Seitenwände weitergetragen wird, nicht unmittelbar von der Einstreuplatte abrutscht, sondern in diesen Mulden weiterhin auf der Einstreuplatte gehalten wird. Darüber hinaus erhöht diese strukturierte Oberfläche 65 die Standsicherheit der Tiere auf der Einstreuplatte und dient auch als Scharrund Pickzone für die Tiere.

Es ist grundsätzlich zu verstehen, dass der Anteil und die Größe des abrasiv wirkenden Abschnitts der Einstreuplatte an die gegebenenfalls rassen- und verhaltensabhängige Scharr- und Pickaktivität und das Wachstum der Krallen und Schnäbel der Tiere angepasst werden kann, um eine ausreichende, aber nicht übermäßige Krallenabnutzung und Schnabelentschärfung zu erzielen. Zu diesem Zweck kann der abrasiv wirkende Abschnitt 62 gegenüber der in Fig. 2 gezeigten Größe verringert werden, beispielsweise indem lediglich die Taschen 61a-j mit einer abrasiv wirkenden Oberfläche versehen werden. Darüber hinaus kann der abrasiv wirkende Abschnitt 62 auch vergrößert werden, beispielsweise indem er sich weiter in x-Richtung der längsseitigen Seitenkanten erstreckt und hierdurch die Abschnitte 63, 64 verkleinert und/oder indem auch teilweise oder vollständig der Abschnitt 65 mit einer abrasiv wirkenden Oberfläche versehen wird.

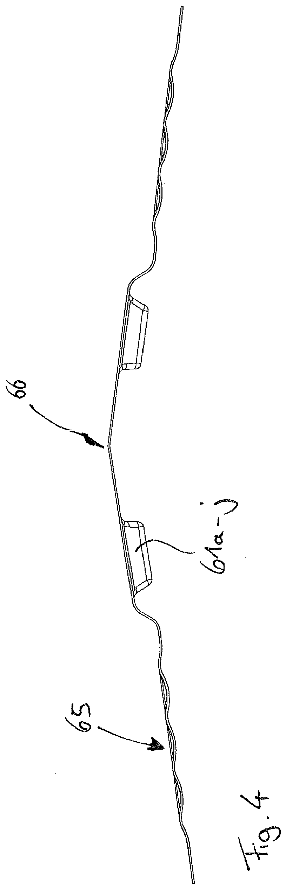

Wie aus Fig. 4 ersichtlich, ist die Einstreuplatte 60 solcherart ausgestaltet, dass sie ausgehend von einer Mittelebene 60a in Richtung auf beide Seitenwände abschüssig geneigt ist. Hierbei ist zwischen den Abschnitten 62 - 64 und dem Abschnitt 65 eine Stufe 66 angeordnet, durch welche der Abschnitt 65 versetzt unterhalb der Abschnitte 62 - 64 zu liegen kommt.

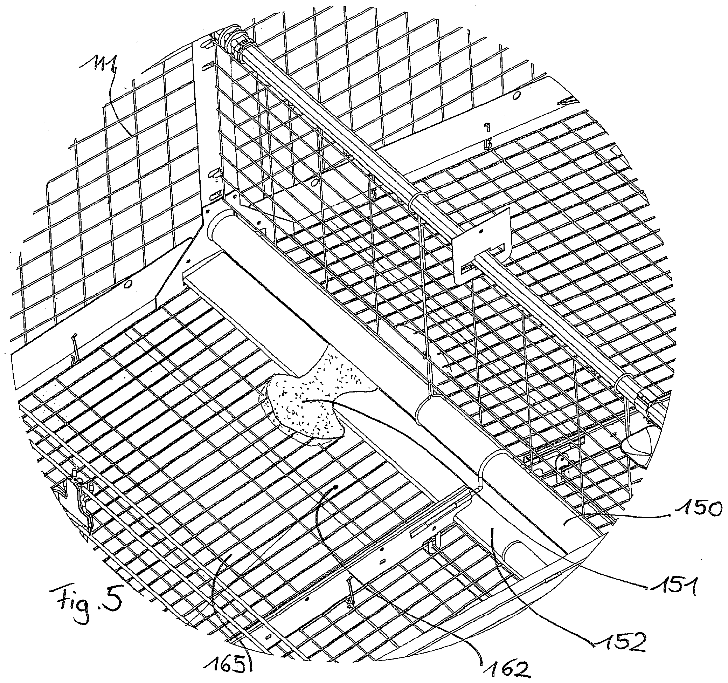

Fig. 5 zeigt eine alternative Ausführungsform der Erfindung. Bei dieser alternativen Ausführungsform ist eine Einstreuplatte 160 unterhalb des Käfigbodens 110 angeordnet und steht in unmittelbarem Kontakt oder ist stellenweise nur geringfügig beabstandet von den Gitterstäben, welche den Käfigboden 110 bilden.

Die Einstreuplatte 160 weist im Gegensatz zu der zuvor erläuterten Einstreuplatte 60 weder Taschen 61a-j noch eine geometrische Oberflächenstruktur in einem Abschnitt 65 auf. Stattdessen ist die Einstreuplatte 160 in einem Abschnitt 162, der sich in Längsrichtung über die gesamte Länge der Einstreuplatte erstreckt, mit einer abrasiv wirkenden Oberfläche versehen und erzielt in diesem Bereich durch das natürliche Scharr- und Pickverhalten der Tiere die gewünschte Krallenabnutzung und Schnabelentschärfung. In einem von diesem abrasiv wirkenden Abschnitt 162 weiter in Richtung der Seitenwände und an diesen anschließenden Abschnitt 165 ist die Einstreuplatte glatt ausgeführt.

Es ist zu verstehen, dass je nach der erforderlichen Wirkung der Krallenkürzung und Schnabelentschärfung des Verhältnis des abrasiv wirkenden Abschnitts 162 zu dem glatten Abschnitt 165 verändert werden kann und gegebenenfalls der glatt wirkende Abschnitt 165 entfallen kann und vollständig durch eine entsprechende Erstreckung des abrasiv wirkenden Bereichs 162 ersetzt werden kann.

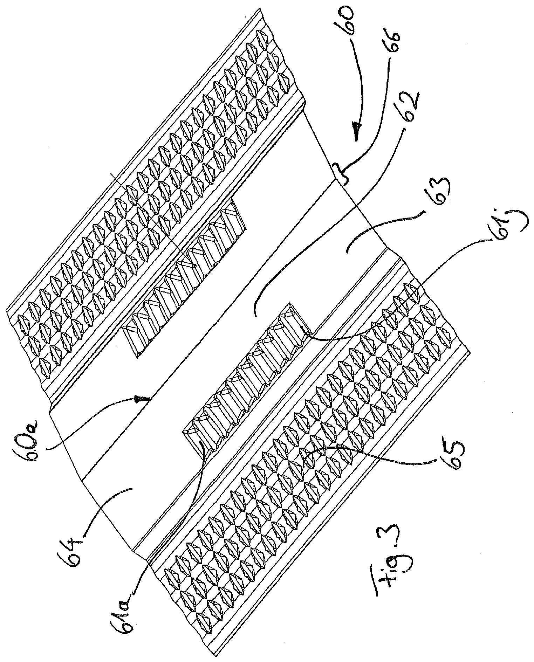

Bei der in Fig. 5 gezeigten Ausführungsform tritt in gleicher Weise wie bei der zuvor erläuterten Ausführungsform gemäß den Figuren 1 - 4 das Einstreumaterial aus einer Austrittsöffnung aus der Einbringvorrichtung 150 nach unten aus. Das Einstreumaterial gelangt dann zunächst auf eine glatt ausgestaltete Ablenkplatte 152, welche das Einstreumaterial beidseits in Richtung beider Seitenwände verteilt. Zu diesem Zweck ist die Ablenkplatte 152 giebelförmig ausgestaltet und weist eine beidseitige abschüssige Neigung in Richtung der Seitenwände auf.

Von dieser Ablenkplatte 152 gelangt das Einstreumaterial auf die Einstreuplatte 160 im Bereich des abrasiv wirkenden Abschnitts 162 und bleibt dort liegen. Hierdurch kann sich in gleicher Weise wie zuvor, ein Kegel aufbauen, der ab einer bestimmten Höhe die Austrittsöffnung verschließt und folglich die Weiterförderung des Einstreumaterials in der Einbringvorrichtung in einen stirnseitig benachbarten Geflügelkäfig bewirkt.

## Patentansprüche

1. Geflügelkäfig zur Haltung von Legehennen, umfassend:
- Einen Käfigboden (10), vorzugsweise aus einer Gitterstruktur,
- Stim- (11,13) und Seitenwände (12,14), welche ausgehend von dem Käfigboden sich nach oben erstrecken und allseitig einen Tieraufenthaltsbereich begrenzen,
- Eine Einbringvorrichtung (50) für Einstreumaterial (51), welche oberhalb des Käfigbodens angeordnet ist und aus der Einstreumaterial aus zumindest einer Austrittsöffnung abgegeben werden kann, wobei zumindest ein Abschnitt der Einbringvorrichtung zwischen den Seitenwänden angeordnet ist
- eine mit dem Käfigboden verbundene Einstreuplatte (60, 160), welche
∘ eine nach oben weisende Bodenaufstandsfläche, mit einem Abschnitt (66), der unterhalb der zumindest einen Austrittsöffnung liegt, und
∘ Befestigungsmittel zum Befestigen der Einstreuplatte an dem Käfigboden
aufweist,
wobei die Bodenaufstandsfläche zumindest einen abrasiv wirkenden Oberflächenabschnitt (62) aufweist, dessen Rauigkeit zur Krallenkürzung der darauf laufenden Geflügeltiere und zur Schnabelentscharfung der darauf pickenden Geflügeltiere dient,
**dadurch gekennzeichnet, dass** die Einstreuplatte mehrere, als Vertiefungen ausgebildete Einstreutaschen (61a-j) aufweist.

2. Geflügelkäfig nach Anspruch 1,
**dadurch gekennzeichnet, dass** der zumindest eine abrasiv wirkende Oberflächenabschnitt (62) sich bis in einen Bereich erstreckt, der unterhalb der zumindest einen Austrittsöffnung liegt.

3. Geflügelkäfig nach Anspruch 1 oder 2,
**dadurch gekennzeichnet, dass** der zumindest eine abrasiv wirkende Oberflächenabschnitt durch eine Vielzahl abrasiv wirkender Körner, welche in ein Bindematerial teilweise oder vollständig eingebettet sind, gebildet wird.

4. Geflügelkäfig nach einem der vorhergehenden Ansprüche,
**dadurch gekennzeichnet, dass** die Einstreuplatte aus einem Polymermaterial hergestellt ist, in das in dem zumindest einen Oberflächenabschnitt eine Vielzahl abrasiv wirkender Körner teilweise oder vollständig unmittelbar in das Polymermaterial oder in ein ausgehärtetes Bindemittel eingebettet ist.

5. Geflügelkäfig nach einem der vorhergehenden Ansprüche ,
**dadurch gekennzeichnet, dass** die Einstreutaschen als eine Reihe oder mehrere parallele Reihen nebeneinanderangeordneter Vertiefungen ausgeführt sind.

6. Geflügelkäfig nach einem der vorhergehenden Ansprüche ,
**dadurch gekennzeichnet, dass** der zumindest eine abrasiv wirkende Oberflächenabschnitt (62) der Bodenaufstandsfläche eine Rauigkeit mit einem ersten Rauhigkeitswertbereich aufweist und die Bodenaufstandsfläche zumindest einen zweiten Oberflächenabschnitt (65) umfasst, in dem eine Rauigkeit mit einem zweiten Rauhigkeitswertbereich ausgebildet ist, der eine gröbere Oberflächenstruktur hat als der erste Rauigkeitswertbereich.

7. Geflügelkäfig nach dem vorhergehenden Anspruch 6,
**dadurch gekennzeichnet, dass** der zumindest eine zweite Oberflächenabschnitt (65) durch eine geometrische Strukturierung gebildet wird, insbesondere durch eine Vielzahl von Mulden oder Erhebungen, welche in der Bodenaufstandsfläche der Einstreuplatte ausgebildet sind.

8. Geflügelkäfig nach einem der vorhergehenden Ansprüche,
**dadurch gekennzeichnet, dass** sich die Einstreuplatte ausgehend von dem unterhalb der zumindest einen Austrittsöffnung liegenden Abschnitt beidseits in Richtung auf jede der beiden Seitenwände erstreckt und dass der/die abrasiv wirkende(n) Oberflächenabschnitt(e) so angeordnet ist/sind, dass er/sie beidseits der Einbringvorrichtung bereitgestellt ist/sind.

9. Geflügelkäfig nach einem der vorhergehenden Absprüche,
**dadurch gekennzeichnet, dass** die Einstreuplatte solcherart geneigt angeordnet ist, dass darauf abgelegte Eier von der Einstreuplatte in Richtung einer Seitenwand abrollen und dass vorzugsweise die Oberflächenstruktur solcherart ausgebildet ist, dass ein auf der Einstreuplatte abgelegtes Ei an keinem Ort auf der Einstreuplatte durch eine quer oder schräg bezüglich Rollrichtung einer auf die Seitenwand zu verlaufenden Struktur auf der Einstreuplatte gehalten wird.

10. Geflügelkäfig nach einem der vorhergehenden Ansprüche,
**dadurch gekennzeichnet, dass** die Einbringvorrichtung ein Förderrohr (50) mit einem darin angeordneten, rotierenden Förderorgan ist, das Förderrohr von einer Stirnseite (11) zu der anderen Stirnseite (13) durch den Tieraufenthaltsbereich verläuft und zumindest eine radiale Öffnung zur Abgabe von Einstreumaterial hat.

11. Geflügelkäfig nach einem der vorhergehenden Ansprüche ,
**dadurch gekennzeichnet, dass** die Einstreuplatte unter dem Käfigboden angeordnet ist.

12. Einstreuplatte (60) für einen Geflügelkäfig nach Anspruch 1, welche
a. eine nach oben weisende Bodenaufstandsfläche, und
b. Befestigungsmittel zum Befestigen der Einstreuplatte an dem Käfigboden
aufweist,
wobei die Bodenaufstandsfläche zumindest einen abrasiv wirkenden Oberflächenabschnitt (62) aufweist, dessen Rauigkeit zur Krallenkürzung der darauf laufenden Geflügeltiere und zur Schnabelentschärfung der darauf pickenden Geflügeltiere dient,
**dadurch gekennzeichnet, dass** die Einstreuplatte mehrere, als Vertiefungen ausgebildete Einstreutaschen (61a-j) aufweist.

13. Einstreuplatte nach Anspruch 11,
**dadurch gekennzeichnet, dass** der abrasiv wirkende Oberflächenabschnitt (62) in einem Mittelbereich der Einstreuplatte angeordnet ist.

14. Einstreuplatte nach Anspruch 11 oder 12,
**dadurch gekennzeichnet, dass** der abrasiv wirkende Oberflächenabschnitt nach einem der vorhergehenden Ansprüche 3-8 ausgebildet ist.

15. Verfahren zur Herstellung einer Einstreuplatte für einen Geflügelkäfig zur Haltung von Legehennen, mit dem Schritt:
- Ausformen einer Trägergrundplatte aus einem Polymer, insbesondere mittels Spritzgießen oder Thermoformen,
**gekennzeichnet durch** den Schritt
- Verbinden einer Vielzahl von abrasiv wirkenden Körnern mit einem Oberflächenabschnitt der Trägergrundplatte, und
Bereitstellen von mehreren, als Vertiefung ausgebildeten Einstreutaschen (61 a-j) in der Einstreuplatte.

16. Verfahren nach Anspruch 15,
**dadurch gekennzeichnet, dass** die abrasiv wirkenden Körner in dem Ausformungsschritt der Trägergrundplatte mit dem Oberflächenabschnitt der Trägergrundplatte verbunden werden.

## Claims

1. Poultry cage for holding laying hens, comprising:
- a cage floor (10), preferably consisting of a mesh structure,
- end walls (11, 13) and side walls (12, 14) which extend upwards from the cage floor and delimit an animal accommodation region on all sides,
- an introduction device (50) for litter material (51), which is arranged above the cage floor and from which litter material can be dispensed out of at least one outlet opening, at least one portion of the introduction device being arranged between the side walls,
- a litter plate (60, 160) connected to the cage floor and comprising
o an upwards-facing floor contact face, comprising a portion (66) positioned below the at least one outlet opening, and
o fixing means for fixing the litter plate to the cage floor,
the floor contact face comprising at least one abrasively acting surface portion (62), the roughness of which serves to shorten the claws of the poultry animals walking thereon and to blunt the beaks of the poultry animals pecking thereon,
**characterised in that** the litter plate comprises a plurality of litter pockets (61 a-j) formed as depressions.

2. Poultry cage according to claim 1,
**characterised in that** the at least one abrasively acting surface portion (62) extends into a region positioned below the at least one outlet opening.

3. Poultry cage according to either claim 1 or claim 2,
**characterised in that** the at least one abrasively acting surface portion is formed by a plurality of abrasively acting particles which are embedded in part or in whole in a binding material.

4. Poultry cage according to any of the preceding claims,
**characterised in that** the litter plate is manufactured from a polymer material in which, in the at least one surface portion, a plurality of abrasively acting particles are embedded in part or in whole directly in the polymer material or in a cured binder.

5. Poultry cage according to any of the preceding claims,
**characterised in that** the litter pockets are configured as a row or a plurality of parallel rows of depressions arranged side by side.

6. Poultry cage according to any of the preceding claims,
**characterised in that** the at least one abrasively acting surface portion (62) of the floor contact face has a roughness having a first roughness value region, and the floor contact face comprises at least one second surface portion (65) in which a roughness is formed having a second roughness value region, which has a coarser surface structure than the first roughness value region.

7. Poultry cage according to preceding claim 6,
**characterised in that** the at least one second surface portion (65) is formed by geometric structuring, in particular by a plurality of troughs or elevations which are formed in the floor contact face of the litter plate.

8. Poultry cage according to any of the preceding claims,
**characterised in that** the litter plate extends on both sides from the portion positioned below the at least one outlet opening, towards each of the two side walls, and **in that** the abrasively acting surface portion(s) is/are arranged in such a way that it/they is/are provided on both sides of the introduction device.

9. Poultry cage according to any of the preceding claims,
**characterised in that** the litter plate is arranged inclined in such a way that eggs laid thereon roll along from the litter plate towards a side wall, and **in that** the surface structure is preferably formed in such a way that an egg laid on the litter plate is not stopped at any location on the litter plate by any structure on the litter plate extending towards the side wall transversely or obliquely to the roll direction.

10. Poultry cage according to any of the preceding claims,
**characterised in that** the introduction device is a conveying tube (50) having a rotating conveying member arranged therein, and the conveying tube extends from one end face (11) to the other end face (13) through the animal accommodation region and has at least one radial opening for dispensing litter material.

11. Poultry cage according to any of the preceding claims,
**characterised in that** the litter plate is arranged below the cage floor.

12. Litter plate (60) for a poultry cage according to claim 1, comprising
a. an upwards-facing floor contact face, and
b. fixing means for fixing the litter plate to the cage floor,
wherein the floor contact face comprises at least one abrasively acting surface portion (62), the roughness of which serves to shorten the claws of the poultry animals walking thereon and to blunt the beaks of the poultry animals pecking thereon,
**characterised in that** the litter plate comprises a plurality of litter pockets (61 a-j) formed as depressions.

13. Litter plate according to claim 11,
**characterised in that** the abrasively acting surface portion (62) is arranged in a central region of the litter plate.

14. Litter plate according to either claim 11 or claim 12,
**characterised in that** the abrasively acting surface portion is formed according to any of the preceding claims 3-8.

15. Method for manufacturing a litter plate for a poultry cage for holding laying hens, comprising the step of:
- forming a carrier base plate from a polymer, in particular by injection moulding or thermoforming, **characterised by** the step of
- connecting a plurality of abrasively acting particles to a surface portion of the carrier base plate, and providing a plurality of litter pockets (61 a-j), formed as depressions, in the litter plate.

16. Method according to claim 15,
**characterised in that** the abrasively acting particles are connected to the surface portion of the carrier base plate in the forming step of the carrier base plate.

## Revendications

1. Cage à volailles de parcage de poules pondeuses, comprenant :
- un fond de cage (10), de préférence composé d'une structure grillagée,
- des parois frontales (11, 13) et des parois latérales (12, 14), qui s'étendent vers le haut en partant du fond de cage et délimitent de toutes parts une zone réservée aux animaux,
- un dispositif d'introduction (50) pour de la litière (51), lequel est disposé au-dessus du fond de cage et duquel la litière provenant au moins d'une ouverture de sortie peut être distribuée, au moins une section du dispositif d'introduction étant disposée entre les parois latérales,
- une plaque de litière (60, 160) reliée au fond de cage, laquelle présente
-- une surface de support de fond pointant vers le haut, pourvue d'une section (66), qui se trouve en-dessous de l'au moins une ouverture de sortie, et
-- des moyens de fixation servant à fixer la plaque de litière au niveau du fond de cage,
la surface d'appui de fond présentant au moins une section de surface (62) ayant une action abrasive, dont la rugosité sert à raccourcir les griffes des volailles circulant sur cette dernière et à émousser le bec des volailles picorant sur cette dernière, **caractérisée en ce que** la plaque de litière présente plusieurs sachets de litière (61a - j) réalisés sous la forme de renfoncements.

2. Cage à volailles selon la revendication 1,
**caractérisée en ce que** l'au moins une section de surface (62) ayant une action abrasive s'étend dans une zone, qui se trouve en-dessous de l'au moins une ouverture de sortie.

3. Cage à volailles selon la revendication 1 ou 2,
**caractérisée en ce que** l'au moins une section de surface ayant une action abrasive est formée par une pluralité de grains ayant une action abrasive, qui sont incorporés en partie ou en totalité dans un matériau de liant.

4. Cage à volailles selon l'une quelconque des revendications précédentes,
**caractérisée en ce que** la plaque de litière est fabriquée à partir d'un matériau polymère, dans lequel une pluralité de grains ayant une action abrasive est incorporée en partie ou en totalité directement dans le matériau de polymère ou dans un liant durci dans l'au moins une section de surface.

5. Cage à volailles selon l'une quelconque des revendications précédentes,
**caractérisée en ce que** les sachets de litière sont réalisés sous la forme d'une rangée ou de plusieurs rangées parallèles de renfoncements juxtaposés.

6. Cage à volailles selon l'une quelconque des revendications précédentes,
**caractérisée en ce que** l'au moins une section de surface (62) ayant une action abrasive de la surface d'appui de fond présente une rugosité pourvue d'une première zone à valeur de rugosité, et **en ce que** la surface d'appui de fond comprend au moins une deuxième section de surface (65), dans laquelle une rugosité est réalisée avec une deuxième zone à valeur de rugosité, qui est dotée d'une structure de surface plus grossière que la première zone à valeur de rugosité.

7. Cage à volailles selon la revendication 6 précédente,
**caractérisée en ce que** l'au moins une deuxième section de surface (65) est formée par une structuration géométrique, en particulier par une pluralité de cavités ou de parties surélevées, qui sont réalisées dans la surface d'appui de fond de la plaque de litière.

8. Cage à volailles selon l'une quelconque des revendications précédentes,
**caractérisée en ce que** la plaque de litière s'étend en partant de la section se trouvant en-dessous de l'au moins une ouverture de sortie des deux côtés en direction de chacune des deux parois latérales, et **en ce que** la section/les sections de surface ayant une action abrasive est/sont disposée(s) de telle sorte qu'elle/elles est/sont fournie(s) de part et d'autre du dispositif d'introduction.

9. Cage à volailles selon l'une quelconque des revendications précédentes,
**caractérisée en ce que** la plaque de litière est disposée de telle manière inclinée que des oeufs déposés sur cette dernière roulent de la plaque de litière en direction d'une paroi latérale, et **en ce que** de préférence la structure de surface est réalisée de telle manière qu'un oeuf déposé sur la plaque de litière n'est maintenu sur la plaque de litière en aucun emplacement sur la plaque de litière par une structure s'étendant de manière transversale ou à l'oblique par rapport à la direction de roulement en direction de la paroi latérale.

10. Cage à volailles selon l'une quelconque des revendications précédentes,
**caractérisée en ce que** le dispositif d'introduction est un tube de convoyage (50) pourvu d'un organe de convoyage en rotation, disposé dans ce dernier, **en ce que** le tube de convoyage s'étend à travers la zone réservée aux animaux depuis un côté frontal (11) en direction de l'autre côté frontal (13) et est doté au moins d'une ouverture radiale servant à distribuer le matériau de litière.

11. Cage à volailles selon l'une quelconque des revendications précédentes,
**caractérisée en ce que** la plaque de litière est disposée sous le fond de cage.

12. Plaque de litière (60) pour une cage à volailles selon la revendication 1, qui présente
a. une surface d'appui de sol pointant vers le haut, et
b. des moyens de fixation servant à fixer la plaque de litière au niveau du fond de cage,
la surface d'appui de fond présentant au moins une section de surface (62) ayant une action abrasive, dont la rugosité sert à raccourcir les griffes des volailles circulant sur cette dernière et à émousser le bec des volailles picorant sur cette dernière, **caractérisée en ce que** la plaque de litière présente plusieurs sachets de litière (61a - j) réalisés sous la forme de renforcements.

13. Plaque de litière selon la revendication 11,
**caractérisée en ce que** la section de surface (62) ayant une action abrasive est disposée dans une zone centrale de la plaque de litière.

14. Plaque de litière selon la revendication 11 ou 12,
**caractérisée en ce que** la section de surface ayant une action abrasive est réalisée selon l'une quelconque des revendications 3 - 8.

15. Procédé servant à fabriquer une plaque de litière pour une cage à volailles de parcage de poules pondeuses, comprenant l'étape suivante :
- la déformation d'une plaque de base de support composée d'un polymère, en particulier au moyen d'un moulage par injection ou d'un thermoformage, **caractérisé par** l'étape suivante :
- la liaison d'une pluralité de grains ayant une action abrasive à une section de surface de la plaque de base de support, et
- la mise à disposition de plusieurs sachets de litière (61a - j), réalisés sous la forme de renfoncements, dans la plaque de litière.

16. Procédé selon la revendication 15,
**caractérisé en ce que** les grains ayant une action abrasive sont reliés, lors de l'étape de déformation de la plaque de base de support, à la section de surface de la plaque de base de support.
